# EUROPÄISCHE PATENTSCHRIFT

(11) **EP 0 475 429 B1**
(45) Veröffentlichungstag und Bekanntmachung des Hinweises auf die Patenterteilung: **24.05.1995**
(21) Anmeldenummer: 91115543.0
(22) Anmeldetag: 13.09.1991
(51) Int. Cl.: H02M 7/10

(54) **An einer Wechselspannungsquelle, zum Beispiel an die Sekundärseite eines Transformators anzuschliessender Spannungsvervielfacher**
Voltage multiplier to be connected to an AC voltage source, for example the secondary winding of a transformer
Multiplicateur de tension à connecter à une source de tension alternative, par exemple l'enroulement secondaire d'un transformateur

(30) Priorität: 14.09.1990 FI 904543
(43) Veröffentlichungstag der Anmeldung: 18.03.1992
(73) Patentinhaber: SALCOMP OY, SF-24100 Salo (FI)
(72) Erfinder: Brockmann, Hans-Jürgen, SF-25130 Muurla (FI)
(74) Vertreter: Altenburg, Udo, Dipl.-Phys.

(56) Entgegenhaltungen:
- DE-A- 2 730 336
- US-A- 3 701 002
- US-A- 3 902 108

## Beschreibung

Die vorliegende Erfindung betrifft einen an eine Wechselspannungsquelle, zum Beispiel an die Sekundärseite eine Transformators anzuschließenden Spannungsvervielfacher, der aus einer Anzahl hintereinander geschalteter Dioden sowie mit ihrem einen Pol an die Verbindungspunkte zwischen den Dioden angeschlossenen Kondensatoren besteht, wobei die anderen Pole der Kondensatoren in der Kette des Spannungsvervielfachers abwechselnd an eines von zwei Gesamtpotentialen gekoppelt sind.

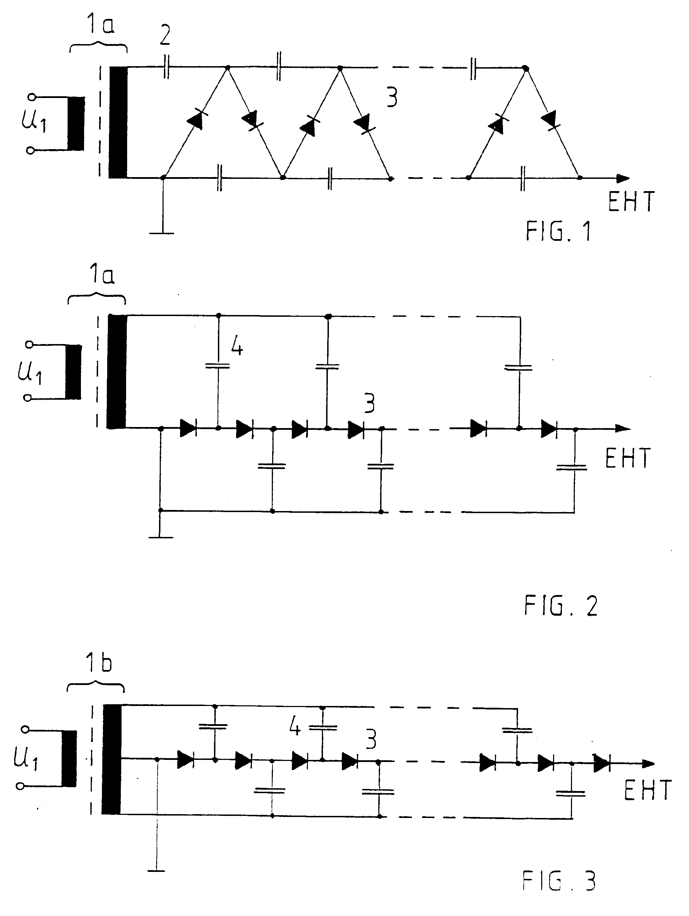

In der beigefügten Figur 1 ist das Schaltbild eines bekannten Spannungsvervielfachers besonders für Pulverbeschichtung gezeigt. Mit dem Transformator 1a wird die Primärspannung U₁ auf U₂ₚₚ ≈ 10 kV und anschließend mit einer Kaskade bestehend aus Kondensatoren und den Dioden 3 auf eine Hochspannung (EHT = Electrical High Tension) von ungefähr 100 kV vervielfacht.

Jeweils eine Komponentengruppe bestehend aus zwei benachbarten Dioden und zwei zugehörigen Kondensatoren bewirkt eine Spitze-zu-Spitze-Gleichrichtung. Um von der Wechselspannung U₂ₚₚ = 10 kV auf eine Gleichspannung von 100 kV zu kommen sind also 10 × 2 = 20 Dioden und 10 × 2 = 20 Kondensatoren erforderlich, genauer gesagt mindestens erforderlich.

Wegen der Serienschaltung der Kondensatoren ist die resultierende Kapazität verhältnismäßig klein, so daß die Streukapazitäten zwischen den Kondensatoren einerseits und den Dioden andererseits eine kapazitative Spannungsteilung bewirken. Es kann deshalb vorkommen, daß zum Beispiel eine aus 25 Gruppen aufgebaute Kaskade nur eine zehnfache Spannungsvervielfachung bewirkt. Dieses Ergebnis läßt sich natürlich dadurch verbessern, daß die vorderen, das heißt dem Transformator zugewandten Kondensatoren einen größeren Kapazitätswert erhalten, so daß die Wechsel- und Gleichspannungsbelastung sämtlicher Kondensatoren etwa gleichgroß wird.

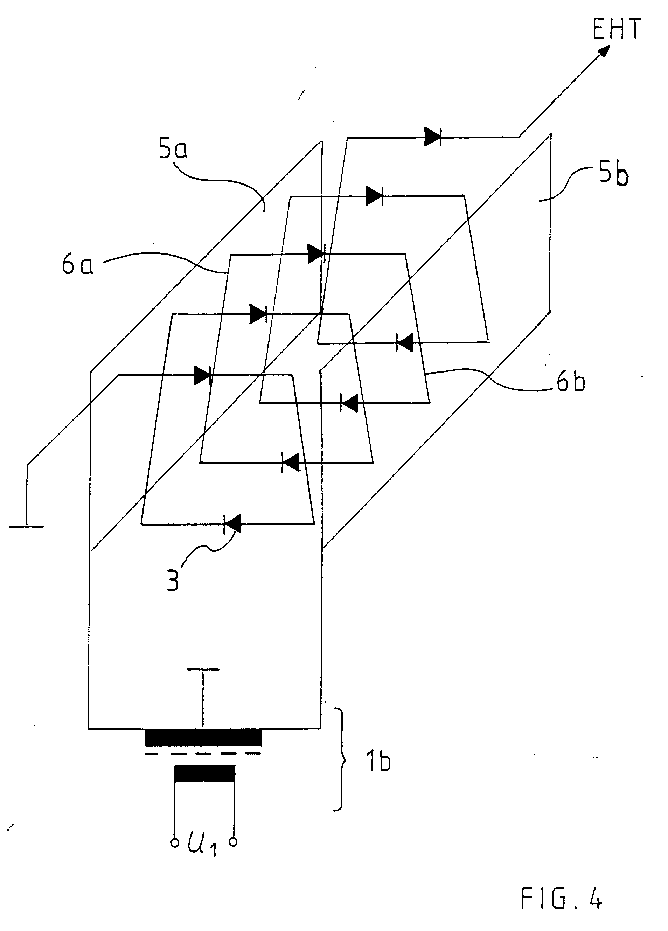

Möchte man aber eine Kaskade aufbauen, deren kondensatoren alle den gleichen Kapazitätswert haben, so kann die Schaltung zum Beispiel auf die in Figur 2 gezeigte Weise aufgebaut werden. Der Nachteil dabei ist jedoch, daß die der Hochspannungsseite zugewandten Kondensatoren eine außerordentlich hohe Spannungsfestigkeit haben müssen. Im angeführten Beispiel muß der letzte Kondensator eine Gleichspannungsfestigkeit von 100 kV haben. Der Aufbau einer solchen Kaskade aus diskreten Hochspannungskondensatoren wäre jedoch außerordentlich kostspielig. Dies gilt auch für die in Figur 3 dargestellte bekannte Schaltung, die zwecks Kompensierens der elektrischen Störstrahlung über den mittleren Ausgang des Transformators 1b symmetrisch ist.

Aus der US 3,902,108 ist ein vielstufiger Kaskaden-Spannungsvervielfacher bekannt geworden, bei dem eine Anordnung von einzelnen Dioden zwischen zwei leitenden Oberflächen angeordnet ist. Die Dioden sind dabei in Serie geschaltet, und die Zusammenschaltpunkte zwischen benachbarten Dioden bilden mit der jeweiligen leitenden Oberfläche einen Kondensator.

Mit der vorliegenden Erfindung sollen nun die vorgenannten Probleme beseitigt und soll ein in seinem Aufbau einfacher Spannungsvervielfacher, d.h. eine Kaskade geschaffen werden, bei der die unvermeidlichen Streukapazitäten ausgenutzt werden.

Im Hinblick auf die Verwirklichung dieser Zielsetzung ist für den erfindungsgemäßen Spannungsvervielfacher charakteristisch, daß die besagten Gesamtpotentiale, die Beläge, ebenflächige Form haben, und der einzelne Kondensator aus dem besagten Belag sowie dem nahe bei diesem angeordneten Dioden-Anschlußdraht besteht.

Die Dioden werden ferner in Form eines Faltlinienwendels hintereinander geschaltet, wobei sich die Gesamtpotentialflächen längs zweier einander entgegengesetzter Seiten des Wendels erstrecken und diese Seiten von den besagten Anschlußdrähten gebildet werden. Zwischen die Anschlußdrähte und die Gesamtpotentialflächen wird am besten ein Dielektrikum gelegt, an dem dann die Beläge unmittelbar befestigt werden können.

Die Erfindung ist im Anspruch 1 definiert.
Ansprüche 2-9 weisen vorteilhafte Ausführungsforme der Erfindung.

Die Erfindung einschließlich ihrer sonstigen Eigenschaften und Vorteile wird im folgenden unter Bezugnahme auf die beigefügte Zeichnung näher beschrieben, in der
die Figuren 1 bis 3 bereits beschriebene bekannte Spannungsvervielfacher-Schaltungen und
Figur 4 eine Ausführungsform des erfindungsgemäßen Spannungsvervielfachers zeigen.

Figur 4 entspricht in ihrer elektrischen Schaltung der Figur 3, daß heißt ist erdsymmetrisch konzipiert.

An die beide Enden der Sekundärseite des Transformators 1b sind die leitenden Flächen, d.h. die Flächen 5a und 5b angeschlossen, und die Dioden sind in Form eines Faltlinienwendels hintereinander geschaltet und so zwischen den Flächen 5a und 5b angeordnet, daß sich ihre Anschlußdrähte 6a und 6b abwechselnd längs der Innenseite der zugeordneten Flächen 5a und 5b in einem kleinen Abstand von denselben erstrecken.

Bei dieser Anordnung werden die erforderlichen Kapazitäten jeweils von den Anschlußdrähten zusammen mit der in ihrer Nähe befindlichen Referenzfläche, das heißt dem Gesamtpotential gebildet.

Um die nötige Hochspannungsfestigkeit zwischen den Dioden-Anschlußdrähten 6a und 6b und den Kondensatorflächen 5a und 5b zu erhalten kann man um die Diodenanordnung mehrere Lagen Isolierfolie (zum Beispiel Makrofol-Folie von ca. 100 »m Dicke) wickeln. Alternativ kann ein Isolierstrumpf oder -rohr zum Beispiel aus Polykarbonat über die Diodenanordnung gesteckt werden.

Dabei können die Flächen 5a und 5b beispielsweise aus auf die Isolierfolie oder das Isolierrohr zu klebender Kupferfolie oder aus Kupferbeschichtungen bestehen.

Bei einer der verwirklichten Ausführungsformen hatten in der Einzelwindung des Wendels die Dioden 3 einen gegenseitigen Abstand von 20 mm und die Anschlußdrähte 6a und 6b einen gegenseitigen Abstand von 23 mm, während der gegenseitige Abstand zweier aufeinanderfolgender Windungen, das heißt die "Ganghöhe" der Schraubenlinie ca. 5 mm betrug. Auf die Kaskadenlänge, die 7 cm betrug, hatte man 2 × 15 Dioden vom Typ BY 707 (9 kV Sperrspannung) angeordnet. Um diese Diodenanordnung wurden ungefähr 15 Lagen von 100 »m dicker Makrofol-Folie gewickelt. Die darübergeklebte Kupferfolie, das heißt der Kondensatorbelag hatte eine Breite von 50 mm.

Die ganze Anordung wurde schließlich in ein Isolierrohr von 41 mm Innendurchmesser gesteckt und mit Epoxidharz CW 1116 BD (100 %) unter Zusatz von Härter HY 2123 (31 %) vergossen. Die Dielektrizitätskonstante derartigen Harzes beträgt etwa 3.

Das Harz verbessert die Spannungsfestigkeit und erhöht dank seiner großen Dielektrizitätskonstante die Streukapazitäten.

Mit der oben beschriebenen Anordnung erzielte man bei kleinen Strömen von einigen Mikroampere einen ausreichend großen inneren Widerstand (ca. 600 MΩ). Diese Werte passen zum Beispiel für die oben erwähnte elektrostatische Pulverbeschichtung.

Es ist klar, daß sich durch andersartiges Anschließen der Gesamtpotentiale und der Diodenkette an den Transformator zum Beispiel auch die in Fig. 2 gezeigte Schaltung der Erfindung entsprechend verwirklichen läßt.

Der Spannungsvervielfacher-Faktor ist infolge der verschiedenen Streukapazitäten natürlich kleiner als die halbe Diodenanzahl, das heißt kleiner als 15. Im oben beschriebenen Beispiel wurde ein Spannungsvervielfacher-Faktor von 5,7 gemessen.

Dieser Faktor ließe sich natürlich zum Beispiel durch Verbreitern der Dioden-Anschlußdrähte oder Hinzuschalten kleiner Metallplättchen sowie Verringerung der Makrofol-Lagen erhöhen.

Einer der Vorteile dieser äußerst kapazitätsarm aufgebauten Kaskade besteht darin, daß die bei der beispielgemäßen Ausführungsform sonst erforderliche hochohmige Widerstandskette reduziert werden kann. Die Spannungsfestigkeit geometrisch kleiner Widerstände ist im allgemeinen kritisch, und mit der Erfindung wird auch dieser Schwachpunkt überwunden.

## Patentansprüche

1. Spannungsvervielfacher zum Anschluß an eine Wechselspannungsquelle, zum Beispiel an die Sekundärseite eines Transformators (1b), wobei der Spannungsvervielfacher aufweist:
eine Anzahl hintereinander geschalteter Dioden (3) und eine Anzahl Kondensatoren, die mit ihrem einen Pol an die Verbindungspunkte zwischen den Dioden (3) angeschlossen sind und die mit ihrem anderen Pol abwechselnd an eine von zwei im Abstand voneinander angeordneten Gesamtpotentialflächen (5a, 5b) angeschlossen sind,
**dadurch gekennzeichnet**, daß
die Dioden (3) einschließlich ihrer Anschlußdrähte (6a, 6b) in dem Raum zwischen den Flächen (5a, 5b) faltlinienwendelartig so angeordnet sind, daß sich die Dioden (3) jeweils von der Nähe der einen Fläche in die Nähe der anderen Fläche erstrecken,
sich die Anschlußdrähte (6a, 6b) der Dioden auf zwei einander entgegengesetzten Seiten des Faltlinienwendels in einem kleinen Abstand von den Flächen (5a, 5b) längs dieser Flächen (5a, 5b) erstrecken, und
die Kapazität eines Kondensators jeweils von einer der Flächen (5a, 5b) und dem in ihrer Nähe angeordneten Anschlußdraht (6a, 6b) einer der Dioden (3) gebildet ist.

2. Spannungsvervielfacher nach Anspruch 1, dadurch gekennzeichnet, daß zwischen den Anschlußdrähten (6a, 6b) und den Flächen (5a, 5b) ein Dielektrikum angeordnet ist.

3. Spannungsvervielfacher nach Anspruch 2, dadurch gekennzeichnet, daß das Dielektrikum aus mehreren Lagen Isolierfolie besteht, die auf den Anschlußdrähten (6a, 6b) angeordnet sind.

4. Spannungsvervielfacher nach Anspruch 2, dadurch gekennzeichnet, daß das Dielektrikum aus einem um die gesamte Diodenanordnung gelegten Isolierstrumpf oder -rohr besteht.

5. Spannungsvervielfacher nach Anspruch 2, dadurch gekennzeichnet, daß die Gesamtpotentialflächen (5a, 5b) unmittelbar auf dem Dielektrikum angeordnet und an diesem beispielsweise durch Kleben befestigt sind.

6. Spannungsvervielfacher nach Anspruch 2, dadurch gekennzeichnet, daß die Gesamtpotentialflächen (5a, 5b) aus Kupferfolie oder einer leitenden Beschichtung besteht.

7. Spannungsvervielfacher nach einem der vorhergehenden Ansprüche, dadurch gekennzeichnet, daß der aus den Dioden (3) und den Flächen (5a, 5b) bestehende Aufbau von einem Isolierrohr umhüllt und mit Harz vergossen ist.

8. Spannungsvervielfacher nach Anspruch 7, dadurch gekennzeichnet, daß auch der Transformator (1b) mit Harz vergossen ist.

9. Spannungsvervielfacher nach einem der vorhergehenden Ansprüche, dadurch gekennzeichnet, daß die Anschlußdrähte (6a, 6b) der Dioden (3) verbreitert sind.

## Claims

1. A voltage multiplier for connection to an AC voltage soure, for example to the secondary side of a transformer (1b), wherein the voltage multiplier comprises:
a number of successively connected diodes (3) and a number of capacitors which are connected with their one terminal to the connecting points between the diodes (3) and which are connected with their other terminal alternately to one of two spaced-apart total potential surfaces (5a, 5b),
characterised in that
the diodes (3) including their connecting wires (6a, 6b) are arranged in the space between the surfaces (5a, 5b) in a fold line coil-like configuration in such a way that the diodes (3) respectively extend from the vicinity of the one surface into the vicinity of the other surface,
the connecting wires (6a, 6b) of the diodes extend on two mutually opposite sides of the fold line coil at a small spacing from the surfaces (5a, 5b) along said surfaces (5a, 5b), and
the capacitance of a capacitor is respectively formed by one of the surfaces (5a, 5b) and the connecting wire (6a, 6b), disposed in the vicinity thereof, of one of the diodes (3).

2. A voltage multiplier according to claim 1 characterised in that a dielectric is arranged between the connecting wires (6a, 6b) and the surfaces (5a, 5b).

3. A voltage multiplier according to claim 2 characterised in that the dielectric comprises a plurality of layers of insulating foil, which are arranged on the connecting wires (6a, 6b).

4. A voltage multiplier according to claim 2 characterised in that the dielectric comprises an insulating sock or tube which is laid around the entire diode arrangement.

5. A voltage multiplier according to claim 2 characterised in that the total potential surfaces (5a, 5b) are arranged directly on the dielectric and are fixed thereto for example by adhesive.

6. A voltage multiplier according to claim 2 characterised in that the total potential surfaces (5a, 5b) comprise copper foil or a conducting coating.

7. A voltage multiplier according to one of the preceding claims characterised in that the structure comprising the diodes (3) and the surfaces (5a, 5b) is enclosed by an insulating tube and cast in with resin.

8. A voltage multiplier according to claim 7 characterised in that the transformer (1b) is also cast in with resin.

9. A voltage multiplier according to one of the preceding claims characterised in that the connecting wires (6a, 6b) of the diodes (3) are widened.

## Revendications

1. Multiplicateur de tension destiné à être raccordé à une source de tension alternative, par exemple au côté secondaire d'un transformateur (1b), le multiplicateur de tension comprenant :
un certain nombre de diodes (3) branchées en série et un certain nombre de condensateurs, qui sont raccordés, par un de leurs pôles, aux points de jonction entre les diodes (3) et qui sont raccordés par leur autre pôle alternativement à l'une de deux surfaces de potentiel total (5a, 5b), situées à distance l'une de l'autre,
caractérisé en ce que
les diodes (3), y compris leurs fils de connexion (6a, 6b), sont disposées sous la forme d'une hélice formant une ligne coudée dans l'espace présent entre les surfaces (5a et 5b) de sorte que les diodes (3) s'étendent respectivement depuis la proximité d'une surface jusqu'à la proximité de l'autre surface,
les fils de connexion (6a, 6b) des diodes s'étendent sur deux côtés opposés de l'hélice formant une ligne coudée, à une faible distance des surfaces (5a, 5b) le long de ces dernières, et la capacité d'un condensateur est formée respectivement par l'une des surfaces (5a, 5b) et le fil de connexion (6a, 6b), situé à proximité de cette surface, de l'une des diodes (3).

2. Multiplicateur de tension selon la revendication 1, caractérisé en ce qu'un diélectrique est disposé entre les fils de connexion (6a,6b) et les surfaces (5a,5b).

3. Multiplicateur de tension selon la revendication 2, caractérisé en ce que le diélectrique est formé de plusieurs couches d'une feuille isolante, qui sont disposées sur les fils de connexion (6a,6b).

4. Multiplicateur de tension selon la revendication 2, caractérisé en ce que le diélectrique est constitué par un manchon ou un tube isolant disposé autour de l'ensemble du dispositif à diodes.

5. Multiplicateur de tension selon la revendication 2, caractérisé en ce que les surfaces de potentiel total (5a,5b) sont disposées directement sur le diélectrique et sont fixées à ce dernier par exemple par collage.

6. Multiplicateur de tension selon la revendication 2, caractérisé en ce que les surfaces de potentiel total (5a,5b) sont constituées par une feuille de cuivre ou un revêtement conducteur.

7. Multiplicateur de tension selon l'une des revendications précédentes, caractérisé en ce que l'agencement constitué par les diodes (3) et les surfaces (5a,5b) est enveloppé par un tube isolant ou enrobé par une résine.

8. Multiplicateur de tension selon la revendication 7, caractérisé en ce que le transformateur (1b) est également enrobé par une résine.

9. Multiplicateur de tension selon l'une des revendications précédentes, caractérisé en ce que les fils de connexion (6a,6b) des diodes (3) sont élargis.
